Europäisches Patentamt

(19) European Patent Office

Office européen des brevets

(11) Numéro de publication: **0 341 208**
A1

(12) # DEMANDE DE BREVET EUROPEEN

(21) Numéro de dépôt: **89810316.3**

(22) Date de dépôt: **27.04.89**

(51) Int. Cl.4: **B 64 C 31/02**

(30) Priorité: **27.04.88 FR 8805842**

(43) Date de publication de la demande:
**08.11.89 Bulletin 89/45**

(84) Etats contractants désignés:
**AT BE CH DE ES FR GB GR IT LI LU NL SE**

(71) Demandeur: **LECOULTRE, André**
**CH-1522 Curtilles (CH)**

(72) Inventeur: **LECOULTRE, André**
**CH-1522 Curtilles (CH)**

(74) Mandataire: **Nithardt, Roland**
**CABINET ROLAND NITHARDT 15, rue Edouard Verdan**
**CH-1400 Yverdon-les-Bains (CH)**

(54) **Fuselage motorisé agencé pour être suspendu à une voilure.**

(57) Le fuselage selon l'invention est destiné à être suspendu à une voilure (1) pour former un appareil ultra-léger motorisé avec lequel un pilote peut effectuer successivement des phases de vol plané et des phases de vol motorisé. Le fuselage (2) est conçu pour pouvoir être porté par le pilote au décollage. Il est pourvu d'une coque (12) qui offre au pilote (13) une position couchée et une position debout, grâce à une ouverture inférieure (15) et une couchette basculante. Un moteur (26) placé dans l'avant de la coque, sous le torse du pilote, entraîne par un arbre une hélice (30) à pales rabattables (31), placée à l'arrière dans le prolongement de la coque. Ainsi le centre de gravité du fuselage se trouve à proximité de celui du pilote. Un tel fuselage est utilisable aussi bien avec un deltaplane (1) qu'avec un parapente ou d'autres voilures.

FIG. I

EP 0 341 208 A1

Bundesdruckerei Berlin

**Description**

## FUSELAGE MOTORISE AGENCE POUR ETRE SUSPENDU A UNE VOILURE

La présente invention concerne un fuselage motorisé pour la locomotion dans l'air, agencé pour être suspendu à une voilure pour former un appareil ultra-léger motorisé utilisable pour le vol motorisé et pour le vol plané, le fuselage comportant une coque aérodynamique allongée renfermant une place pour un pilote, le fuselage comportant en outre des moyens de suspension à la voilure, un moteur disposé dans la coque en avant des moyens de suspension, et une hélice disposée à l'arrière et pourvue d'un arbre relié au moteur par des moyens de transmission, l'hélice comportant une position de propulsion pour le vol motorisé et une position d'arrêt à encombrement réduit notamment pour le vol plané, et la coque offrant au pilote une position debout pour le décollage et une position couchée pour le vol et comportant au moins une ouverture inférieure pour le passage des jambes du pilote en position debout.

La demande internationale WO 86/07329 décrit un appareil volant ultra-léger motorisé (appelé ci-dessous ULM) utilisable comme un motoplaneur et formé par un fuselage du genre susmentionné, suspendu à un deltaplane de type usuel qui est piloté au moyen d'une barre dite de trapèze, passant sous le fuselage, le pilote étant couché en position ventrale. L'hélice bipale est montée sur un châssis articulé qui, en position de propulsion, porte l'arbre de l'hélice assez haut au-dessus de l'arrière du fuselage pour que l'hélice ne s'étende pas plus bas que celui-ci. Pour passer au vol plané (appelé aussi vol libre), le châssis articulé est rabattable vers l'avant dans la coque, les deux pales de l'hélice devant alors être orientées parallèlement à la coque pour s'y escamoter. Grâce au placement du moteur à l'avant, le centre de gravité du fuselage est proche de celui du pilote et de la verticale passant par le point de suspension à l'aile, de sorte que le pilote peut facilement décoller debout en courant et en portant l'aile et le fuselage, puis être soulevé par ce dernier sans que l'assiette du fuselage change. On obtient ainsi un fuselage particulièrement léger, qui peut être dépourvu de roues et muni de simples patins d'atterrissage, et qui ne nécessite pas de chariot auxiliaire ou d'autres moyens similaires pour le décollage.

Cependant, le châssis articulé portant l'hélice représente une grande complication de construction et un supplément de masse gênant à l'extrémité arrière du fuselage, laquelle est relativement éloignée du point de suspension afin que l'hélice ne touche pas la voilure. De plus, le déplacement longitudinal de cette masse au rabattement est gênant. D'autre part, cette construction complique les moyens de transmission pour l'entraînement de l'hélice et elle nécessite d'orienter l'hélice quand on la rabat.

La demande de brevet DE-A-3'440'823 montre une nacelle motorisée qui est destinée à être suspendue à un deltaplane et qui ne possède pas de châssis articulé pour l'hélice, celle-ci étant montée dans une position stationnaire à l'arrière de la nacelle. On obtient ainsi un appareil ULM destiné essentiellement au vol motorisé. En vol plané, son aérodynamique est relativement médiocre, parce que le pilote est simplement couché sur la nacelle qui ne forme pas une véritable coque enveloppant son corps, et parce que la traînée de l'hélice arrêtée est trop importante. En outre, l'encombrement de l'hélice nécessite une béquille fixe sous l'arrière du fuselage et un train de roulement sur la barre du trapèze pour le décollage et l'atterrissage.

La demande de brevet FR-A-2'543'512 décrit un appareil ULM susceptible de faire du vol plané, mais dépourvu de fuselage. Un groupe moto-propulseur à hélice à pales rabattables est suspendu à la quille d'un deltaplane, dans une position longitudinale qui change d'une phase de vol à une autre. Le pilote se trouve beaucoup plus bas que ce groupe et il est suspendu au deltaplane de la manière classique, au moyen d'un harnais. Le décollage se fait à l'aide d'un chariot spécial. Cet appareil est donc peu avantageux en ce qui concerne l'aérodynamique et la facilité d'emploi.

La présente invention a pour but d'éviter les inconvénients susmentionnés, en fournissant un fuselage motorisé du type indiqué en préambule, ayant une faible traînée aussi en vol plané qu'en vol motorisé tout en évitant l'emploi du châssis articulé rabattable mentionné ci-dessus, le fuselage étant néanmoins bien équilibré par rapport à son point de suspension à la voilure et par rapport à la position du pilote, de manière à permettre au pilote de décoller facilement en position debout en portant le fuselage.

Dans ce but, le fuselage selon l'invention est caractérisé en ce que l'arbre d'hélice s'étend à l'arrière dans une position stationnaire, et en ce que l'hélice comporte des pales rabattables, articulées par rapport à l'arbre de manière à être sensiblement parallèles à lui en position d'arrêt et à se trouver dans le prolongement de la coque.

De cette façon, la partie arrière de la coque peut avantageusement être équipée d'un organe rabattable de protection de l'hélice, cet organe ayant une position déployée vers le sol, dans laquelle il s'étend plus bas que l'hélice en position de propulsion, et une position rabattue contre ou dans la coque.

Selon un aspect particulièrement avantageux de l'invention, ladite place du pilote est telle que le centre de gravité du pilote se trouve à proximité d'une verticale passant par le centre de gravité du fuselage, ce qui permet de maintenir constante l'assiette de l'appareil, notamment au cours du décollage. Le fuselage peut alors être équipé d'organes de suspension aux épaules du pilote. Une réalisation particulièrement commode consiste en ce que le fuselage comporte une couchette basculante pour le torse du pilote, et en ce que cette couchette est articulée au fuselage au niveau des hanches du pilote . De préférence, la couchette basculante est accrochée au fuselage de manière amovible au niveau de son articulation, et lesdits organes de suspension aux épaules du pilote sont fixés à la couchette basculante, ce qui permet au pilote de s'équiper d'abord de la couchette, puis d'y suspendre le fuselage en se tenant debout.

Dans une forme de réalisation préférée du fuselage, dans ladite position couchée, le pilote est couché tête en avant et le moteur est placé en dessous de la tête et/ou du torse du pilote. Cette disposition permet au pilote de prendre facilement sa position couchée, par exemple à partir d'une position debout, sans être gêné par la présence du moteur. Les moyens de transmission peuvent comporter un arbre longitudinal qui passe entre les jambes du pilote en position debout.

Grâce à son excellent équilibre longitudinal, le fuselage selon l'invention peut être utilisé avec différentes voilures, grâce à des moyens de suspension appropriés. Dans un premier cas, les moyens de suspension comportent au moins trois suspentes souples dont les extrémités inférieures sont fixées à la coque, et dont les extrémités supérieures sont rattachées à un organe d'accrochage commun pour la suspension du fuselage à un deltaplane, comme la suspension pendulaire habituelle d'un pilote pratiquant le vol libre.

Dans un autre cas, les moyens de suspension comportent de chaque côté du fuselage une paire de suspentes souples dont les extrémités inférieures sont fixées à la coque, mais les extrémités supérieures des suspentes de chaque paire sont rattachées à un organe d'accrochage respectif commun, les deux organes d'accrochage étant espacés latéralement l'un de l'autre pour la suspension du fuselage à un parachute directionnel, appelé aussi "parapente".

La présente invention et ses avantages apparaîtront mieux dans la description suivante d'un exemple de réalisation préférée, en référence aux dessins annexés, dans lesquels :

la fig. 1 est une vue latérale schématique qui montre un appareil ULM composé d'un deltaplane et d'un fuselage motorisé selon l'invention, cet appareil étant en vol avec son pilote en position couchée,

la fig. 2 montre le même appareil à l'arrêt juste avant le décollage, le pilote étant en position debout,

la fig. 3 est une vue en coupe longitudinale verticale du fuselage,

la fig. 4 est une vue en plan du fuselage, et

les fig. 5 et 6 sont des vues frontales montrant comment le même fuselage peut être suspendu respectivement à un deltaplane ou à un parapente, au moyen d'organes de suspension appropriés.

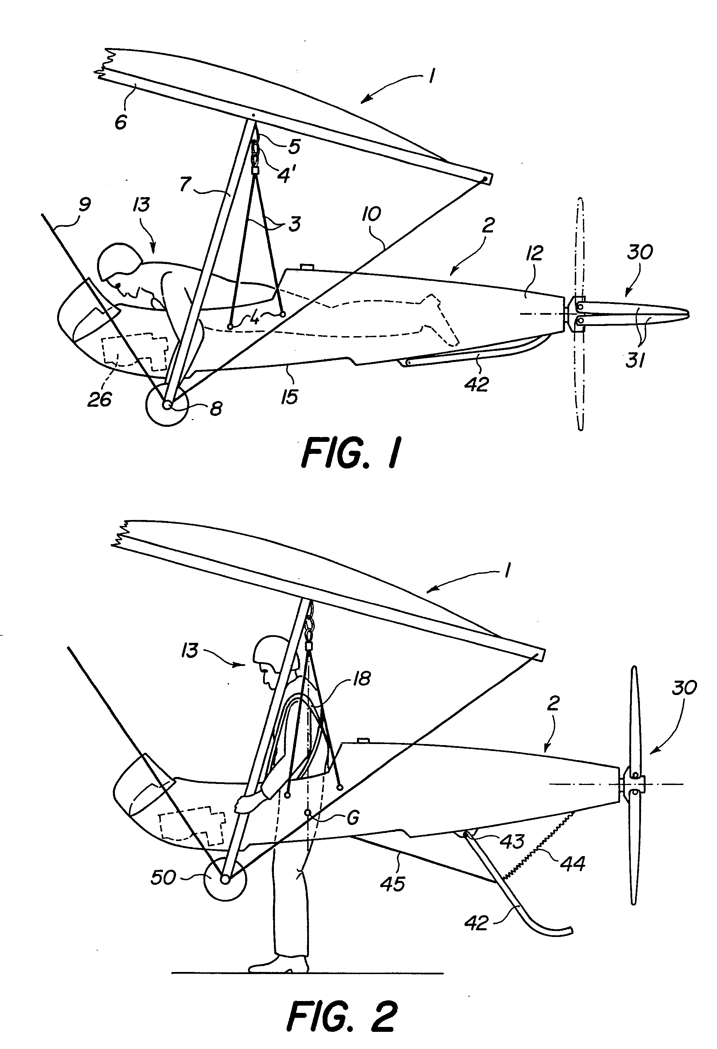

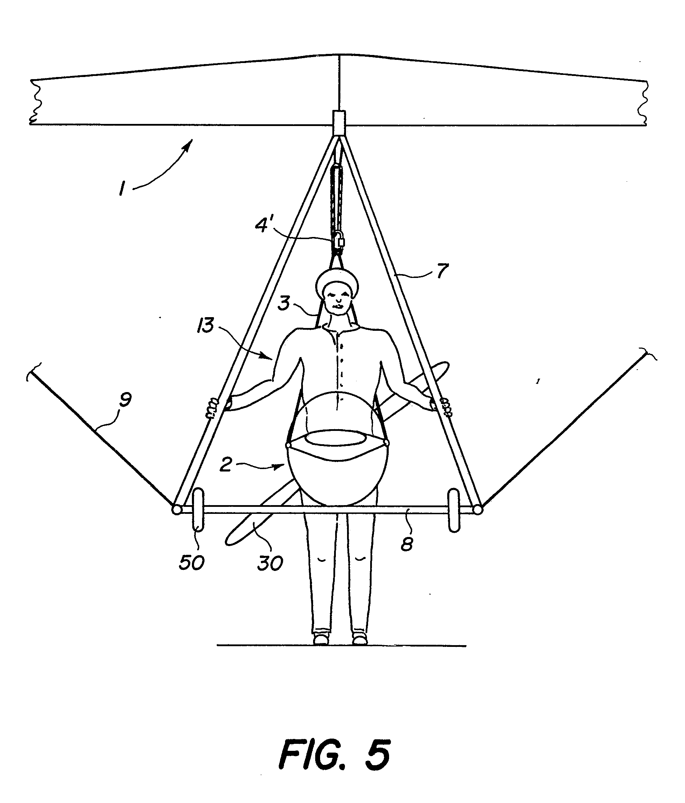

L'exemple d'appareil illustré par les fig. 1, 2 et 5 se compose d'un deltaplane classique 1 (appelé aussi aile de vol libre) et d'un fuselage motorisé 2 selon l'invention, le fuselage étant suspendu au deltaplane au moyen de deux paires de suspentes souples 3 dont les extrémités inférieures sont accrochées à des têtes latérales 4 de support du fuselage, tandis que leurs extrémités supérieures sont rassemblées et accrochées ensemble par un mousqueton 4' à une boucle de suspension classique 5 fixée à la structure 6 du deltaplane. Cette structure comporte également un organe de commande bien connu, appelé communément le trapèze, formé par deux barres obliques 7 dont les extrémités inférieures sont reliées entre elles par une barre transversale 8 et aux extrémités du deltaplane par des câbles 9 et 10.

On notera que les deux suspentes latérales postérieures 3 peuvent être remplacées par une seule suspente arrière située dans le plan médian. Celle-ci peut être équipée d'un coupe-circuit électrique qui arrête le moteur quand la suspente se détend, afin d'éviter que l'hélice déployée touche le deltaplane 1 si l'arrière du fuselage s'en rapproche, notamment dans des conditions de vol perturbées. Cette suspente arrière pourrait aussi être remplacée par un bras rigide.

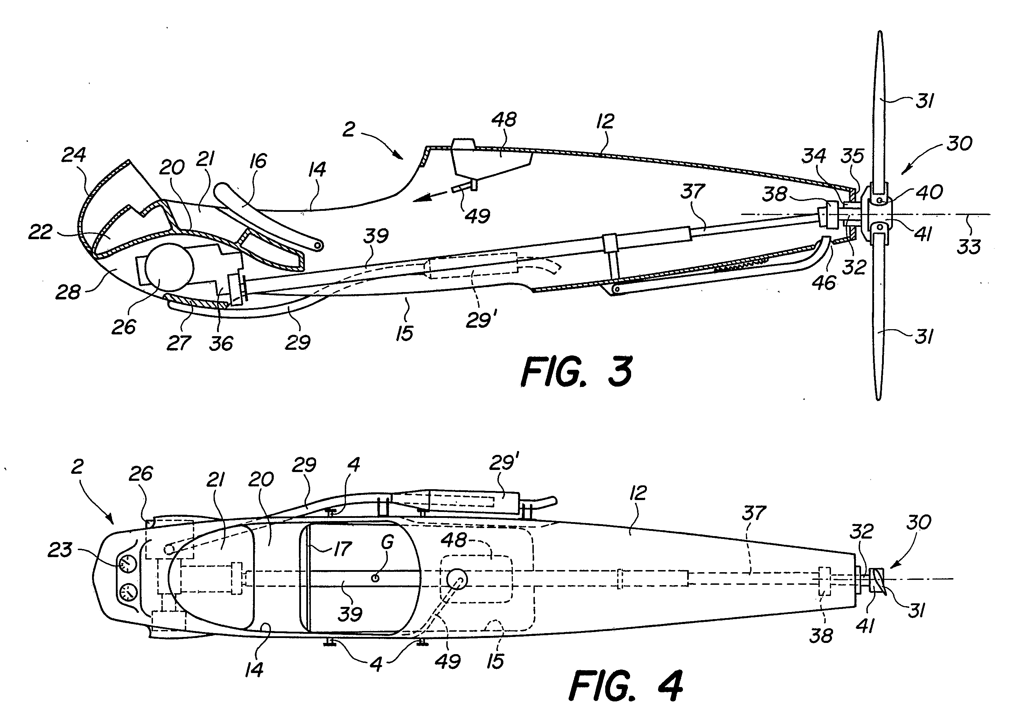

Le fuselage 2, dont la construction est visible plus particulièrement dans les fig. 3 et 4, comporte une coque légère et rigide 12 de forme aérodynamique, réalisée par exemple en polyester armé de fibres de verre. Cette coque présente une forme fuselée dans laquelle un pilote 13 peut prendre place en position couchée ventrale sans que son corps émerge sensiblement à l'extérieur de la coque. Ainsi, cet ensemble présente de bonnes caractéristiques de pénétration dans l'air qui, pour le vol plané, sont aussi favorables que celles d'un pilote de deltaplane classique, enfermé dans un cocon souple. Pour laisser passer le corps du pilote, la coque 12 est pourvue d'une ouverture supérieure 14 et d'une ouverture inférieure 15 qui sont partiellement superposées au moins dans la zone du centre de gravité G du fuselage, pour permettre au pilote 13 de se tenir debout dans cette zone, comme le montre la fig. 2. En avant de cette zone, il est prévu une couchette basculante 16 (supprimée sur la fig. 4 pour la clarté du dessin) qui est montée de manière pivotante et amovible, par exemple sur une barre transversale 17 solidaire de la coque au niveau des hanches du pilote. De plus, cette couchette est pourvue de sangles 18 (fig. 2) permettant de suspendre le fuselage aux épaules du pilote quand celui-ci est debout. Ainsi, le pilote peut s'attacher la couchette 16 sur le torse, avant de se placer dans le fuselage et d'accrocher celui-ci à la couchette. En dessous de la couchette 16, la coque 12 comporte une structure transversale 20 qui forme notamment un alvéole 21 pour un parachute de secours et un alvéole 22 pour des instruments 23 exposés aux yeux du pilote, derrière un pare-brise profilé 24 en matière synthétique transparente. Selon les cas, ces alvéoles pourraient être prévus latéralement ou supprimés pour réduire la hauteur de la coque.

Un moteur 26, par exemple à essence, est disposé dans la partie avant du fuselage, en dessous de la tête du pilote 13 quand celui-ci est en position couchée, entre la structure 20 et une paroi inférieure 27 de la coque 12. Une ou plusieurs ouvertures 28 dans l'avant de la coque 12 permettent l'entrée d'air pour le refroidissement du moteur, cet air étant dévié sous le pilote dans la structure 20 et s'échappant par l'ouverture inférieure 15. Un tuyau d'échappement des gaz 29 s'étend à l'extérieur de la coque jusqu'à un pot d'échappement 29'.

Une hélice 30 à pales rabattables 31 est portée par un arbre rotatif 32 monte dans une position stationnaire à l'arrière du fuselage 2, de manière que la direction de l'axe de rotation 33 de l'hélice corresponde à la direction de poussée voulue. L'arbre 32 est monté par un palier 34 dans une paroi arrière 35 de la coque 12. Le moteur 26 est relié à l'arbre 32 par une boîte de réduction 36, entraînant un arbre de transmission tubulaire 37 pourvu d'un joint d'articulation 38 à l'arrière et protégé par un tube fixe 39 qui s'étend entre les jambes du pilote. Dans le présent exemple, le joint 38 est prévu pour permettre une inclinaison de l'arbre 37 par rapport à l'axe 33 de l'hélice, mais il n'est pas nécessaire dans tous les cas. En effet, l'axe 33 de l'hélice peut être dans le prolongement de l'arbre de transmission si celui-ci n'est pas trop incliné. L'hélice 30 a deux pales 31 montées chacune par une articulation 40 sur un moyeu 41 solidaire de l'arbre 32, cette articulation contenant un ressort qui tend à rabattre la pale parallèlement à l'axe 33 quand l'hélice ne tourne pas, dans la position dessinée en traits continus en fig. 1. Cette position repliée de l'hélice 30, située avantageusement dans le prolongement de la coque 12, est extrêmement favorable pour la finesse en vol plané. En outre, elle évite un accrochage des pales à des obstacles ou au sol, par exemple à l'atterrissage. L'hélice peut aussi comporter plus de deux pales.

Dès que l'hélice est entraînée en rotation par le moteur, les pales 31 tendent à s'écarter sous l'effet de la force centrifuge et de la réaction de l'air, pour prendre leur position de propulsion illustrée par les fig. 2 et 3. Pour éviter que l'hélice entre alors en contact avec le sol, spécialement au décollage, une béquille rabattable 42 est articulée en 43 sous la partie arrière de la coque, cette béquille étant rabattue au moyen d'un élément élastique 44 et déployée par le pilote au moyen d'un câble de tirage 45. Une ouverture arrière 46 est ménagée pour recevoir son extrémité dans l'arrière de la coque. Bien entendu, on peut prévoir un organe de protection différent à la place de cette béquille, par exemple un arceau ou une double béquille en V renversé assurant un appui stable sur le sol et une protection sur les côtés. Une autre construction avantageuse, non représentée, consiste à remplacer la béquille basculante 42 par une béquille qui s'escamote dans la coque par coulissement à travers une ouverture de petite taille. L'extrémité avant de cette béquille coulissante peut être articulée à un manchon qui coulisse sur le tube 39. En position déployée, son extrémité arrière peut venir assez près de la circonférence de l'hélice et assurer ainsi une protection efficace.

Les dessins montrent également une implantation avantageuse d'un réservoir d'essence 48 monté dans une zone centrale de la coque 2, au-dessus des cuisses du pilote, et raccordé au moteur par une canalisation latérale 49. Ce réservoir peut avoir une capacité de quelques litres, suffisante pour une ou plusieurs heures de vol motorisé.

L'ensemble du fuselage 2 peut être construit de façon à présenter un poids total relativement modeste, de l'ordre de 20 à 30 kg, pour être supporté par les épaules du pilote se trouvant en position debout. La position du centre de gravité G à proximité immédiate du centre de gravité du pilote est permise par la répartition favorable des éléments mécaniques, avec l'hélice 30 à l'arrière et le moteur 26 à l'avant. Dans certains cas, on peut obtenir une répartition différente en rejetant à l'arrière la boîte de réduction 36.

L'appareil ULM est prévu pour voler tantôt au moteur, tantôt en vol plané. Le décollage s'effectue généralement (mais pas nécessairement) au moteur, dans la position illustrée par la figure 2. Le pilote lance le moteur, soulève le deltaplane 1 et le fuselage 2 et se met à courir avec l'aide de la poussée fournie par l'hélice, jusqu'à ce que la portance de la voilure soulève successivement le fuselage, puis le pilote s'appuyant sur la couchette basculante 16. Le pilote rentre alors ses jambes dans la coque pour se mettre en position couchée, tout en gardant ses bras à l'extérieur pour piloter l'appareil en tenant dans ses mains la barre de trapèze 8. Il rabat la béquille 42 en relâchant le câble 45. Les commandes du moteur peuvent être disposées à sa portée sur un côté de la coque, ce qui lui permet par exemple d'arrêter le moteur après avoir atteint une altitude suffisante, de faire un vol plané d'une certaine durée, puis de remettre en marche le moteur pour voler plus longtemps. L'atterrissage peut se faire de la même manière qu'avec un deltaplane classique, avec le moteur arrêté, l'hélice repliée et le pilote en position debout. La barre de trapèze 8 peut être équipée d'une paire de roulettes 50 à titre de protection, pour éviter de toucher le sol. Cela permet aussi d'atterrir en glissade, le pilote restant alors en position couchée.

Un avantage important du fuselage 2 décrit ci-dessus réside dans le fait qu'il peut être utilisé aussi bien avec le deltaplane 1 qu'avec un parapente 51 (parachute directionnel), comme le montre la figure 6. Pour cela, il suffit de grouper différemment les extrémités supérieures des suspentes 3 du fuselage, en raccordant les deux suspentes 3a de gauche à une première boucle 52a et les deux suspentes de droite 3b à une seconde boucle 52b, ces deux boucles étant espacées latéralement l'une de l'autre au-dessus des épaules du pilote 13. De telles boucles existent déjà sur les parapentes, pour permettre la suspension d'un harnais portant le pilote à l'extrémité inférieure des suspentes 53 raccordées respectivement à la moitié de gauche et à celle de droite de la coupole textile 54 du parapente. Afin de stabiliser latéralement le fuselage dans des virages serrés, on peut ajouter une paire de diagonales, éventuellement élastiques, reliant chaque boucle 52a, 52b à l'extrémité inférieure de la suspente arrière 3 située du côté opposé. Pour permettre le pilotage en position couchée, les cordelettes classiques 55 de commande du parapente peuvent être prolongées pour passer sur des poulies montées à cet effet de chaque côté de la coque.

Grâce à l'utilisation d'une hélice à pales rabattables, le décollage peut se faire sans danger de la manière suivante, la voilure du parapente étant posée sur le sol derrière le fuselage. En portant le fuselage 2, le pilote commence à avancer. La voiture du parapente se gonfle et monte au-dessus du pilote, qui peut alors lancer le moteur pour faire tourner l'hélice et décoller. Ainsi, les suspentes 53 du parapente ne risquent pas de s'accrocher à l'hélice et on peut se passer d'un grillage de protection autour de celle-ci.

Il faut remarquer qu'un fuselage de ce genre permet encore d'autres utilisations dans le domaine des sports et des divertissements, par exemple pour propulser un homme se tenant sur des skis ou sur un véhicule tel qu'un traîneau, un chariot à roulettes ou un bateau. Dans tous les cas, la proximité immédiate des centres de gravité du fuselage et du pilote est un avantage essentiel pour la facilité d'emploi de l'appareil.

**Revendications**

1. Fuselage motorisé pour la locomotion dans l'air, agencé pour être suspendu à une voiture (1) pour former un appareil ultra-léger motorisé utilisable pour le vol motorisé et pour le vol plané, le fuselage comportant une coque aérodynamique allongée (12) renfermant une place pour un pilote, le fuselage comportant en outre des moyens (3) de suspension à la voiture, un moteur (26) disposé dans la coque (12) en avant des moyens de suspension (3), et une hélice (30) disposée à l'arrière et pourvue d'un arbre relié au moteur par des moyens de transmission, l'hélice comportant une position de propulsion pour le vol motorisé et une position d'arrêt à encombrement réduit notamment pour le vol plané, et la coque (12) offrant au pilote une position debout pour le décollage et une position couchée pour le vol, et comportant au moins une ouverture inférieure (15) pour le passage des jambes du pilote en position debout, caractérisé en ce que l'arbre d'hélice (32) s'étend à l'arrière dans une position stationnaire, et en ce que l'hélice (30) comporte des pales rabattables (31), articulées par rapport à l'arbre (32) de manière à être sensiblement parallèles à lui en position d'arrêt et à se trouver dans le prolongement de la coque (12).

2. Fuselage selon la revendication 1, caractérisé en ce que la partie arrière de la coque est équipée d'un organe rabattable (42) de protection de l'hélice, cet organe ayant une position déployée vers le sol, dans laquelle il s'étend plus bas que l'hélice (30) en position de propulsion, et une position rabattue contre ou dans la coque (12).

3. Fuselage selon la revendication 1, caractérisé en ce que ladite place du pilote (13) est telle que le centre de gravité du pilote se trouve à proximité d'une verticale passant par le centre de gravité (G) du fuselage (2).

4. Fuselage selon la revendication 3, caractérisé en ce qu'il est équipé d'organes (18) de suspension aux épaules du pilote.

5. Fuselage selon la revendication 4, caractérisé en ce qu'il comporte une couchette basculante (16) pour le torse du pilote, et en ce que cette couchette est articulée au fuselage au niveau des hanches du pilote.

6. Fuselage selon la revendication 5, caractérisé en ce que la couchette basculante (16) est accrochée au fuselage de manière amovible au niveau de son articulation, et en ce que lesdits organes de suspension aux épaules du pilote sont fixés à la couchette basculante (16).

7. Fuselage selon la revendication 4 ou 5, caractérisé en ce que, dans ladite position couchée, le pilote (13) est couché tête en avant, et en ce que le moteur (26) est placé en dessous de la tête et/ou du torse du pilote.

8. Fuselage selon la revendication 7, caractérisé en ce que lesdits moyens de transmission comportent un arbre longitudinal (37) situé en dessous de la position couchée du pilote et entre les jambes du pilote en position debout.

9. Fuselage selon la revendication 3, caractérisé en ce que les moyens de suspension comportent au moins trois suspentes souples (3) dont les extrémités inférieures sont fixées à la coque, et dont les extrémités supérieures sont rattachées à un organe d'accrochage commun (4) pour la suspension du fuselage à un deltaplane (1).

10. Fuselage selon la revendication 3, caractérisé en ce que les moyens de suspension comportent de chaque côté du fuselage une paire de suspentes souples (3) dont les extrémités inférieures sont fixées à la coque, et en ce que les extrémités supérieures des suspentes de chaque paire sont rattachées à un organe d'accrochage respectif commun (52a, 52b), les deux organes d'accrochage étant espacés latéralement l'un de l'autre pour la suspension du fuselage a un parachute directionnel (51).

**FIG. 1**

**FIG. 2**

FIG. 3

FIG. 4

**FIG. 5**

**Office européen des brevets**

# RAPPORT DE RECHERCHE EUROPEENNE

Numero de la demande

EP  89 81 0316

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | DE-A-3 440 823  (HARMS) <br> * En entier * | 1 | B 64 C  31/02 |
| D,A |  | 7,8 | |
|  | --- | | |
| D,Y | FR-A-2 543 512  (ROUSSEAU) <br> * Page 6, lignes 1-14 * | 1 | |
| A |  | 2,3 | |
|  | --- | | |
| D,A | WO-A-8 607 329  (LECOULTRE) <br> * En entier * | 1 | |
| A |  | 4,5,7,8 | |
|  | --- | | |
| A | GB-A-2 141 985  (BICKHAM) <br> * En entier * | 1 | |
|  | ----- | | |

DOMAINES TECHNIQUES RECHERCHES (Int. Cl.4)

B 64 C

Le présent rapport a été établi pour toutes les revendications

| Lieu de la recherche | Date d'achèvement de la recherche | Examinateur |
|---|---|---|
| LA HAYE | 14-08-1989 | HAUGLUSTAINE H.P.M. |